# EUROPEAN PATENT APPLICATION

(11) **EP 1 386 764 A2**
(43) Date of publication of application: **04.02.2004**
(21) Application number: 03254791.1
(22) Date of filing: 31.07.2003
(51) Int. Cl.: B60H 1/00

(54) **Centrifugal blower**

(30) Priority: 02.08.2002 JP 2002226299
(71) Applicant: Sanden Corporation, Isesaki-shi, Gunma 372-8502 (JP)
(72) Inventor: Kitazume, Michio, c/o Sanden Corporation, Isesaki-shi, Gunma 372-8502 (JP); Ohtsuki, Yutaka, c/o Sanden Corporation, Isesaki-shi, Gunma 372-8502 (JP)
(74) Representative: Haley, Stephen

(57) **Abstract**

A centrifugal blower 1 includes a scroll 2 that accommodates an impeller 5 having many blades 5a arranged in a circumferential direction around a rotating shaft 9. The centrifugal blower 1 sucks air from a suction port 3 and discharges the sucked air toward an outside of a discharge port 4 via each space of blades 5a. An enclosure 8 controls backward flow air discharged toward a vicinity of the discharge port 4. The enclosure 8 is disposed in a circumferential direction around the suction port 3 in the scroll 2. The enclosure 8 encloses an outside circumference of the impeller 5 at regular intervals.

## Description

The present invention relates to a centrifugal blower, for installation on a vehicle air conditioner or similar.

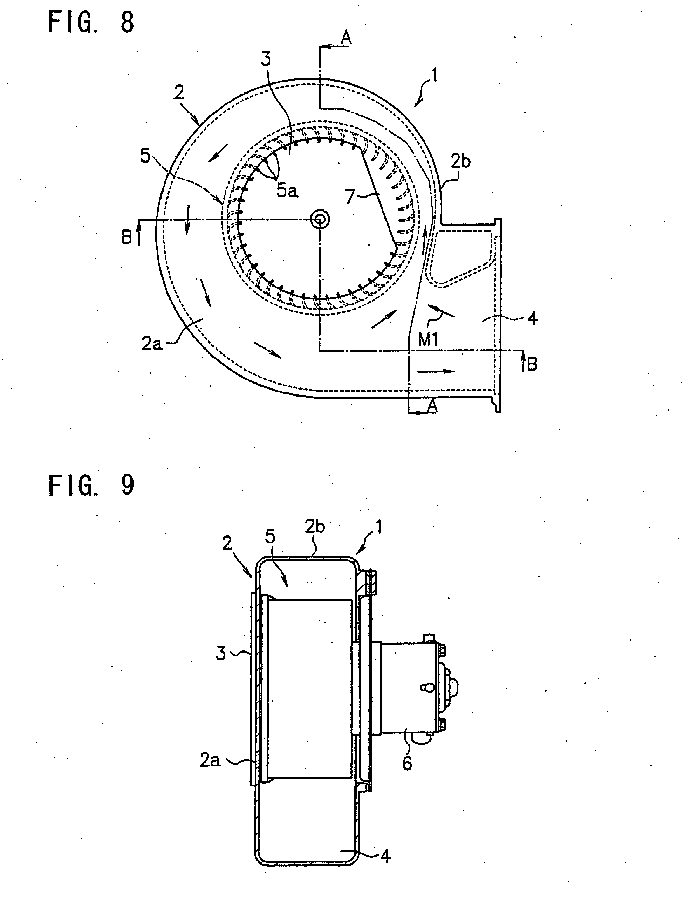

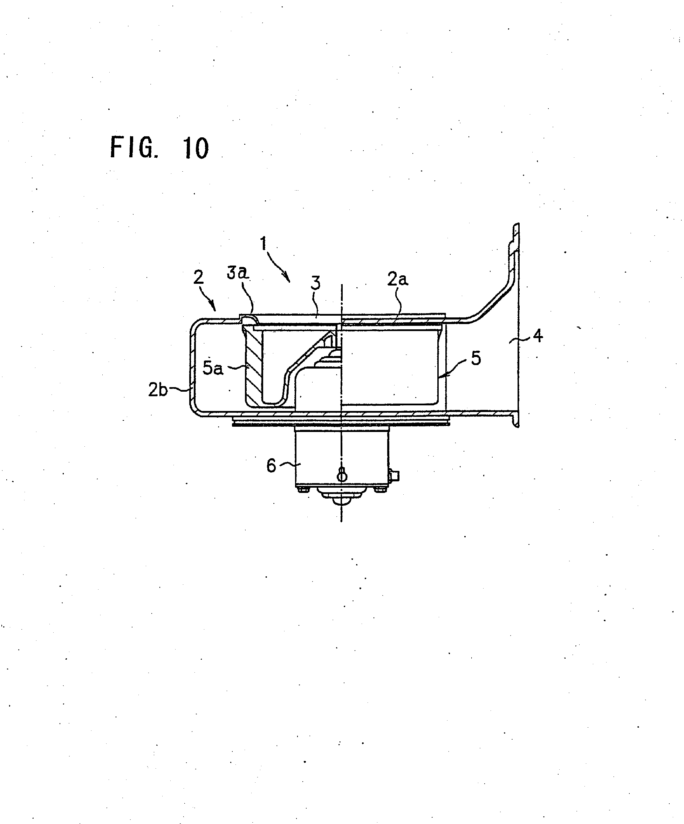

Referring to Figs. 8 to 10, a known centrifugal blower is shown. Fig. 8 is a side sectional view of the conventional centrifugal blower; Fig. 9 is a cross-sectional view in an arrow direction taken along the line A-A in Fig. 8; and Fig. 10 is a cross-sectional view in an arrow direction taken along the line B-B in Fig. 8.

The centrifugal blower 1 includes a scroll 2 having a swirl shape, a suction port 3 formed on one side end surface 2a of the scroll 2, and a discharge port 4 formed at an end of winding of the scroll 2. The scroll 2 accommodates an impeller 5 having many blades 5a arranged in a circumferential direction around a rotating shaft 9, and an electrical motor 6 rotates the impeller 5. While the electrical motor 6 is driven electrically, air sucked from the suction port 4 flows toward an outside of the discharge port 4 via each spaces of the blades 5a.

Generally, air blowing efficiency and specific noise of the centrifugal blower 1 are affected by pressure loss. That is, while the centrifugal blower 1 is driving in a state of high pressure loss, a part of the air (an arrow Ml of Fig. 8) discharged toward the discharge port 4 flows from the discharge port 4 toward the impeller 5, therefore, the efficiency of the blast of the centrifugal blower 1 goes down. At this time, part of air collides with the blades 5a, particularly a suction port side of the blades 5a because air sucked from the suction port 3 almost flows through the electrical motor side of the blades 5a, generating noise. A further part of the air is sucked again from a space between a suction port side end of the blades 5a and an inside surface of a bellmouth 3a of the suction port 3 into the impeller 5, therefore, disorderly airflow occurs by collision between air sucked afresh and air sucked again and low frequency noise is caused by the disorder of the airflow.

In order to solve such problems of air blowing efficiency and of specific noise, referring to Fig. 8, a projection brim 7 is formed from a vicinity of a start of winding of the scroll 2 to a narrow passage portion that the distance between an outside circumference surface of the impeller 5 and an inside circumference surface of an outer circumference end surface 2b of the scroll 2 becomes narrow. Therefore, sucking force in the area that the backward flow air occurs and bypass dependent on the backward flow air goes down.

With regard to the above invention, however, the air blowing efficiency may go down because an opening size of the suction port 3 becomes smaller, that is, quantity of wind may reduce. At the same time, disorder of airflow may occur because the opening shape of the suction port 3 is unbalanced with respect to the opening shape of the impeller 5. Therefore, the setting of the quantity of driven air may be complicated.

Moreover, the above invention does not solve the problem of noise from the backward flow air colliding with the suction port side of the blades 5a. Also backward flowing air may be sucked by even a small suction force because backward flow air immediately can get close to the space between the suction side end of the blades 5a and the inside surface of the bellmouth 3a of the suction port 3. Therefore, the above invention insufficiently attenuates to prevent backward flow air from bypassing. As a result, in such an invention, the problems outlined above may not be solved.

Therefore, a need has arisen for a centrifugal blower that overcomes these and other shortcomings of the related art. A technical advantage of the present invention is that a lowering of an air blowing efficiency and of a specific noise may be reduced when the centrifugal blower is driving in a state of high pressure loss.

In an embodiment of this invention, a centrifugal blower includes a scroll having a swirl shape and an impeller accommodated in the scroll. The impeller has many blades arranged in a circumferential direction around a rotating shaft. The scroll has a suction port formed on one side end surface of the scroll and a discharge port formed on an end of the winding of the scroll. The centrifugal blower sucks air from the suction port and discharges the air toward an outside of the discharge port via each space of the blades. An enclosure controls backward flow air discharged toward a vicinity of the discharge port. The enclosure is disposed at a circumferential direction around the suction port in the scroll. Such enclosure encloses an outside circumference of the impeller at regular intervals.

Other objects, features, and advantages of the embodiments of this invention will be apparent to, and understood by, persons of ordinary skill in the art from the following description of preferred embodiments with reference to the accompanying drawings, in which:
Fig. 1 is a schematic cross-sectional view showing a vehicle air conditioner;
Fig. 2 is a side sectional view of a centrifugal blower according to the present invention;
Fig. 3 is a cross-sectional view in an arrow direction taken along the line A-A in Fig. 2;
Fig. 4 is a cross- sectional view in an arrow direction taken along the line B-B in Fig. 2;
Fig. 5 is a graph of states of noise generation according to presence and absence of an enclosure;
Fig. 6 is a cross-sectional view of a centrifugal blower showing another wide portion of the enclosure;
Fig. 7 is a side sectional view of a centrifugal blower according to another example of the present invention;
Fig. 8 is a side sectional view of a conventional centrifugal blower;
Fig. 9 is a cross-sectional view in an arrow direction taken along the line A-A in Fig. 8; and
Fig. 10 is a cross-sectional view in an arrow direction taken along the line B-B in Fig. 8;

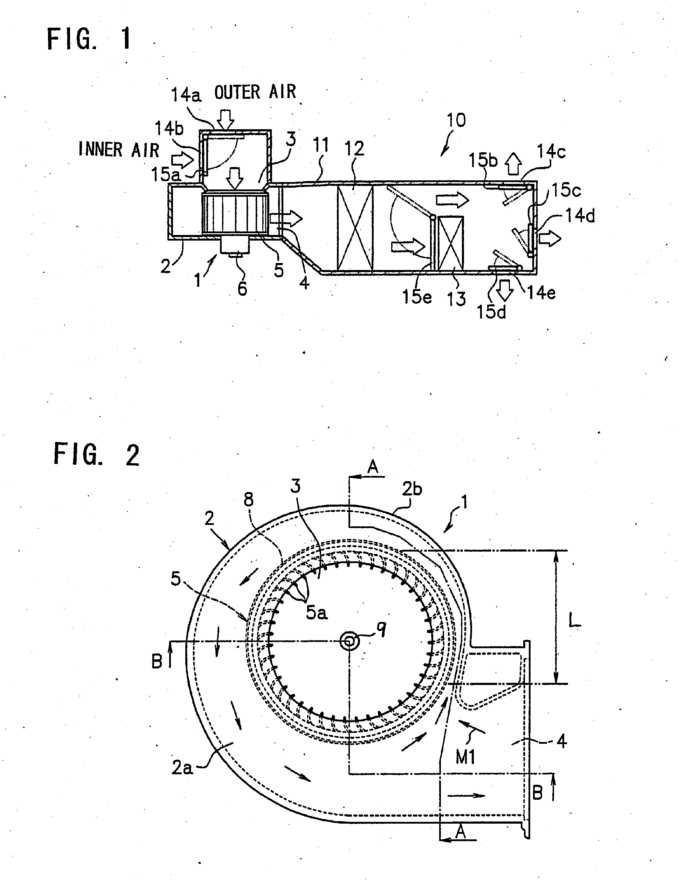

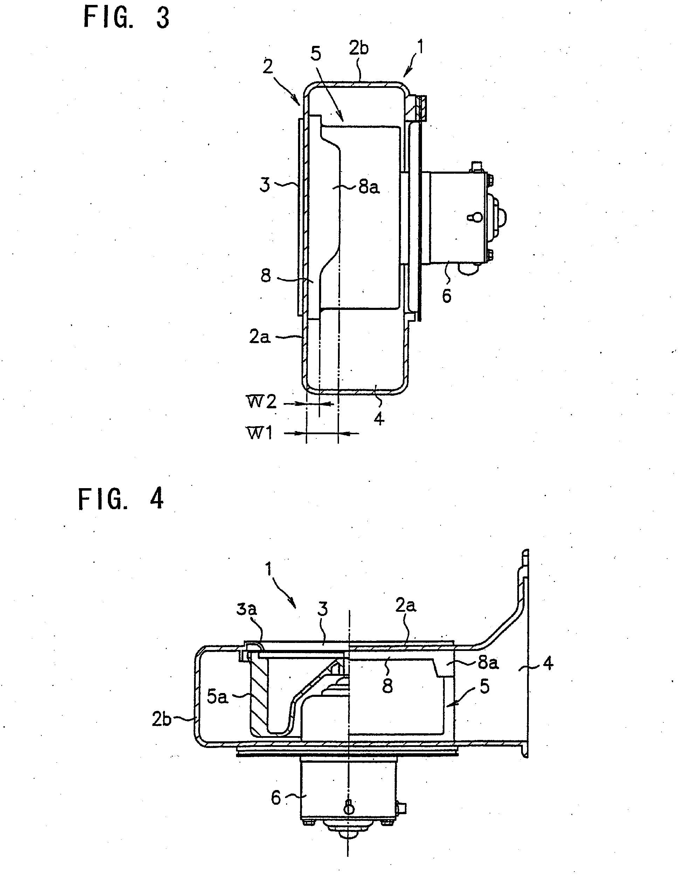

Referring to Figs. 1 to 5, a centrifugal blower, for use in a vehicle air conditioner, according to the present invention is described. In this example, a centrifugal blower (hereinafter referred to as a blower) having many forward curved blades will be described as an example. Parts having like construction as in a conventional blower shown in Figs. 8 to 10 will be described using like reference numerals.

On describing a blower according to the present invention, first with reference to Fig. 1, description will be made of the outline of a vehicle air conditioner onto which this blower is mounted. A vehicle air conditioner 10 has an air conditioning duct 11 for introducing air-conditioning air. Toward the downwind side from the upwind side, there are installed a blower 1, an evaporator 12, which is a component of a refrigeration circuit, and a heater core 13 to which hot water is fed from a radiator (not shown) in order. Also, on the upwind side of the air conditioning duct 11, there are provided an outer air suction port 14a and an inner air suction port 14b; on the downwind side, there are provided an upper discharge port 14c for defrosting, a top discharge port 14d for discharging toward the occupant's chest, etc. and the like, and a foot discharge port 14e for discharging toward the occupant's feet respectively; and each port 14a to 14e is controlled by open-close dampers 15a to 15d. Further, an amount of ventilation to the heater core 13 is controlled by an air mixing damper 15e.

When air-cooling the interior of the vehicle compartment, the blower 1 is driven inner air or outer air passes through the evaporator 12 in which refrigerant is circulating to generate cold air and this cold air is discharged into the vehicle compartment at least through one of the discharge ports 14c to 14e. On the other hand, when air-heating the interior of the vehicle compartment, the blower 1 is likewise driven; inner air or outer air is caused to pass through the heater core 13 in which hot water is circulating to generate warm air; and this warm air is discharged into the vehicle compartment at least through one of the discharge ports 14c to 14e. In this respect, the outline arrow of Fig. 1 indicates a flow of air.

Although air conditioning into the vehicle compartment is performed by the blower 1 as described above, when driving in the defrost mode (the upper discharge port 14c only is opening) or when driving in the foot mode (the foot discharge port 14e only is opening), there is a state of a high pressure loss because each opening size of the ports 14c, 14e is generally smaller than that of the top discharge port 14d. In this invention, blower 1 adopts the following structure for improving the air blowing efficiency and the specific noise of the blower 1 in a state of a high pressure loss.

First, a whole structure of the blower 1 will be described with reference to Figs. 2 to 4. The blower 1 includes a scroll 2 having a swirl shape and an impeller 5 accommodated in the scroll 2, and an electric motor 6 provided as a rotation drive source of the impeller 5. The impeller 5 has many forward curved blades 5a arranged in a circumferential direction around a rotating shaft 9. The scroll 2 has a suction port 3 formed on one side end surface 2a of the scroll 2 and a discharge port 4 formed on an end of winding of the scroll 2. While the electrical motor 6 is driven, air is sucked from the suction port 4 into the impeller 5 and the air sucked into the impeller 5 is discharged from discharge port 4 into the air conditioning duct 11 via each space of the blades 5a.

The above-described configuration of the blower 1 is similar to that of the conventional blower, and a feature of the blower 1 according to the invention resides in providing an enclosure 8 disposed around an outside circumference of the impeller 5 at regular intervals.

As shown in Figs. 2 to 4, the enclosure 8 integrally is formed on one side end surface 2a of the scroll 2 by resin founding and extending from an inside of the one side end surface 2a toward an electric motor direction. The enclosure 8 has a first width W1 and a second width W2 (W1>W2). The first width W1 (a projection portion 8a) extends from a vicinity of a start of a winding of the scroll 2 to a narrow passage portion becoming narrow at a distance between the outside circumference surface of the impeller 5 and an inside circumference surface of an outer circumference end surface 2b of the scroll 2. That is, the projection portion 8a is formed in correspond once with the area in the backward flow air easily occurs (a range L, in shown Fig. 2).

Therefore, in the case of being in a state of a high pressure loss, that is, a backward flow air occurs (arrow Ml of Fig. 2) toward the impeller 5, the enclosure 8 prevents the backward flow from colliding with a suction port side of the blades 5a and sucking again from a space between a suction port side end of the blades 5a and an inside surface of a bellmouth 3a of the suction port 3 into the impeller 5. Moreover, the enclosure 8 still more prevents the above colliding and the above re-sucking because the projection portion 8a having the extensive width W1 is formed to correspond with the area that the backward flow air easily occurs.

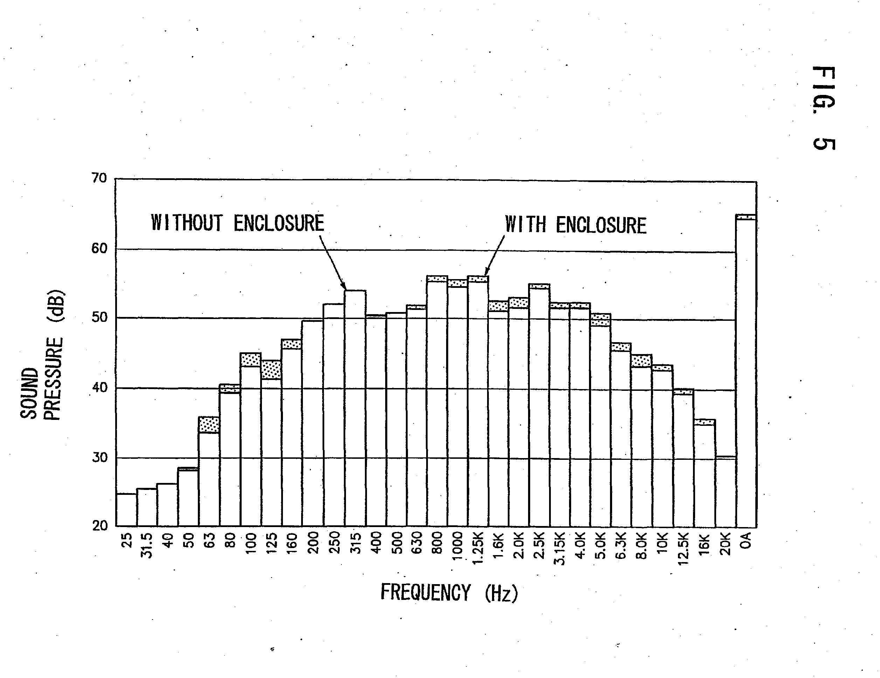

Now, noise attenuation action of the blower 1 will be described with reference to Fig. 5, comparing the conventional blower having no enclosure 8 with the blower 1 according to the invention. In Fig. 5, the ordinate axis shows sound pressure, and the abscissa axis shows frequency. The dotted parts in Fig. 5 show the amount of noise attenuation of the blower 1 according to the invention.

Specifically, comparing the conventional blower with the blower 1 according to the embodiment, low frequency noise in bands from 50 Hz to 160 Hz, mainly caused by collision between air sucked afresh from the suction port 3 and air sucked again from the vicinity of the discharge port 4 via each spaces of the blades 5a into the impeller S is attenuated, and also a high frequency noise in bands from 630 Hz to 16 kHz, mainly caused by collision between the suction port side of the blades 5a and the backward flow air from the vicinity of the discharge port 4 is attenuated.

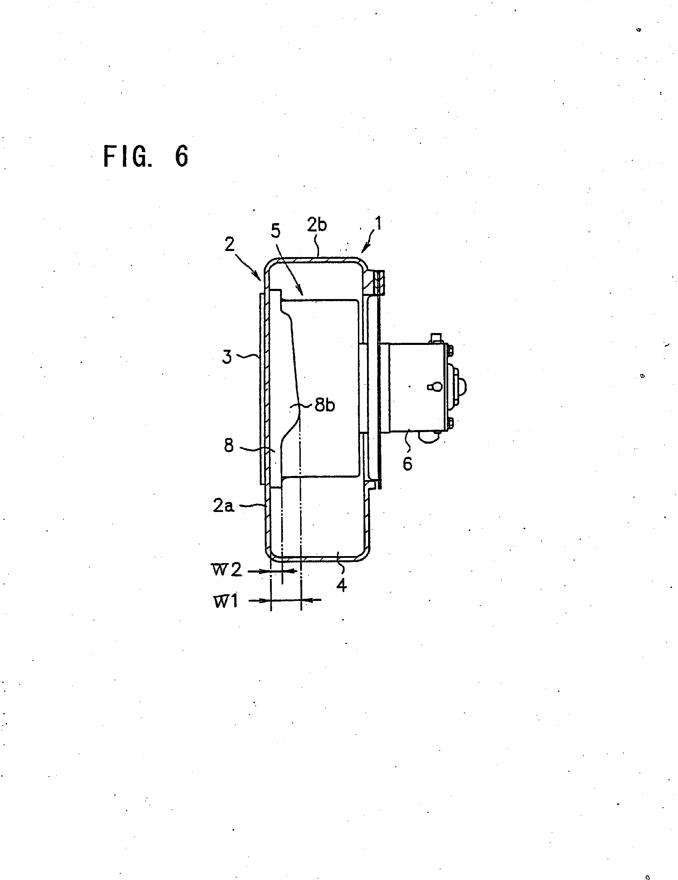

Fig. 6 shows another projection portion 8b of the enclosure 8. The width of the projection portion 8b is extensively formed only on the start side of the winding of the scroll 2 and the width narrows going away from the start side of the winding of the scroll 2, because the backward flow air is concentrated at the start side of the winding of the scroll 2. Therefore, in this projection portion 8b, the above-mentioned noises may be attenuated.

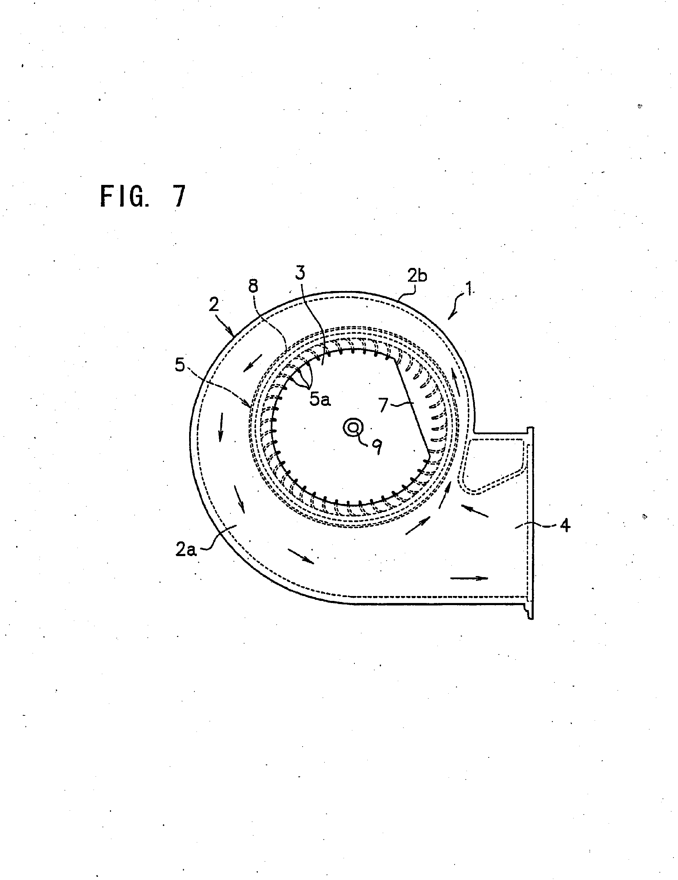

Fig. 7 shows another example of the blower 1. Parts having construction as in the above blower 1 will be described using like reference numerals. A feature of a blower 1 according to this example resides in providing a projection brim 7 as the conventional blower. The projection brim 7 is integrally formed at a part of a peripheral edge of the suction port 3 corresponding to the projection portion 8a. Therefore, there is increased prevention of the backward flow air return into the impeller 5 because of prevention of the sucking force in an area that backward flow air occurs easily.

## Claims

1. A centrifugal blower (1) comprising:
a scroll (2) having a swirl shape, an impeller (5) accommodated in said scroll (2) and having plural blades (5a) arranged in a circumferential direction around a rotating shaft (9) such that said scroll (2) has a suction port (3) formed on one side end surface (2a) of the scroll (2) and a discharge port (4) formed on an end of winding of the scroll 2, such that said centrifugal blower (1) , in use, sucks air from said suction port (3) and discharges said air toward an outside of said discharge port (4) via each space of said blades (5a); and
wherein an enclosure (8) for controlling backward flow air discharged toward a vicinity of said discharge port (4) is disposed at a circumferential direction around said suction port (3) of said scroll (2), said enclosure (8) enclosing an outside circumference of said impeller (5) at regular intervals.

2. The blower (1) of claim 1, wherein said enclosure (8) has a projection portion (8a) extending from a vicinity of the start of the winding of said scroll (2) to a passage portion narrowing at a distance between said outside circumference surface of said impeller 5 and an inside circumference surface of an outer circumference end surface (2b) of said scroll (2), and the width of said projection portion (8a) becomes larger than the width of an another portion of said enclosure (8).

3. The blower (1) of claim 2, wherein a projection brim (7) is integrally formed at a part of the peripheral edge of said suction port (3) corresponding to said projection portion (8a).

4. The blower (1) of claims 1 to 3, wherein said enclosure (8) is integrally formed with said scroll (2).
